# EUROPEAN PATENT APPLICATION

(11) **EP 4 534 334 A1**
(43) Date of publication of application: **09.04.2025**
(21) Application number: 23826358.6
(22) Date of filing: 19.06.2023
(51) Int. Cl.: B60L 53/31, B60L 53/22, H02M 3/335, H02J 7/00

(54) **POWER CONVERSION APPARATUS, CHARGING PILE, ON-BOARD CHARGER AND ELECTRIC VEHICLE**

(30) Priority: 21.06.2022 CN 202210707553
(71) Applicant: Huawei Digital Power Technologies Co., Ltd., Shenzhen, Guangdong 518043 (CN)
(72) Inventor: CHEN, Jiansheng, Shenzhen, Guangdong 518043 (CN); JIANG, Zhenting, Shenzhen, Guangdong 518043 (CN); ZHANG, Zelong, Shenzhen, Guangdong 518043 (CN)
(74) Representative: Isarpatent
(86) International application number: PCT/CN2023/101120
(87) International publication number: WO 2023/246710

(57) **Abstract**

A power conversion apparatus, a charging pile, an on-board charger, and an electric vehicle are provided, to reduce operating costs of the power conversion apparatus and improve working stability of the power conversion apparatus. The power conversion apparatus includes: a first capacitor branch, where the first capacitor branch includes at least one electrolytic capacitor, and is configured to perform voltage stabilization on a voltage received by the power conversion apparatus, to obtain a first voltage; a second capacitor branch, where the second capacitor branch includes a plurality of film capacitors connected in series, and is configured to: perform filtering on the first voltage, and perform voltage division on a first voltage obtained through filtering, to obtain a plurality of second voltages, where each film capacitor obtains one second voltage; and direct current converters in a one-to-one correspondence with the film capacitors, where an input end of each direct current converter is connected in parallel to the corresponding film capacitor; and the direct current converter is configured to perform voltage conversion on the second voltage output by the film capacitor.

## Description

### CROSS-REFERENCE TO RELATED APPLICATIONS

This application claims priority to Chinese Patent Application No. 202210707553.5, filed with the China National Intellectual Property Administration on June 21, 2022 and entitled "POWER CONVERSION APPARATUS, CHARGING PILE, ON-BOARD CHARGER, AND ELECTRIC VEHICLE", which is incorporated herein by reference in its entirety.

### TECHNICAL FIELD

This application relates to the field of power electronics technologies, and in particular, to a power conversion apparatus, a charging pile, an on-board charger, and an electric vehicle.

### BACKGROUND

With development of new energy vehicles, on-board chargers (on-board chargers, OBCs) are increasingly widely used.

Specifically, the OBC mainly includes a first conversion circuit and a second conversion circuit. An input end of the first conversion circuit is connected to a charging pile through a charging gun. An output end of the first conversion circuit is connected to an input end of the second conversion circuit. An output end of the second conversion circuit may be connected to a high-voltage battery of an electric vehicle. The first conversion circuit may convert an alternating current output by the charging pile into a direct current. The second conversion circuit may convert the voltage of the direct current output by the first conversion circuit into a charging voltage of the high-voltage battery, to charge the high-voltage battery in the electric vehicle. In actual use, as a requirement for a charging rate of the electric vehicle gradually becomes higher, the second conversion circuit may include a plurality of direct current conversion modules whose input ends are connected in series. At least one electrolytic capacitor is connected in parallel to the input end of each direct current conversion module. The electrolytic capacitor connected in parallel to each direct current conversion module may obtain a part of a voltage. Each direct current conversion module may perform voltage conversion on a voltage output by the electrolytic capacitor connected in parallel. In this way, each conversion module converts a part of power, and charging efficiency of the OBC is improved.

However, due to a limitation of a withstand voltage specification of an electrolytic capacitor, once a direct current conversion module is short-circuited, an electrolytic capacitor connected to the faulty direct current conversion module is short-circuited, and another electrolytic capacitor connected in series to the electrolytic capacitor breaks down due to a high voltage. In this case, the entire circuit cannot work. Therefore, the current OBC needs further research.

### SUMMARY

This application provides a power conversion apparatus, a charging pile, an on-board charger, and an electric vehicle, to reduce operating costs of the power conversion apparatus and improve working stability of the power conversion apparatus.

According to a first aspect, an embodiment of this application provides a power conversion apparatus, including a first capacitor branch, a second capacitor branch, and a plurality of direct current converters.

The first capacitor branch includes at least one electrolytic capacitor, and is configured to perform voltage stabilization on a voltage received by the power conversion apparatus, to obtain a first voltage. The second capacitor branch includes a plurality of film capacitors connected in series, and is configured to: perform filtering on the first voltage, and perform voltage division on a first voltage obtained through filtering, to obtain a plurality of second voltages. Each film capacitor obtains one second voltage. The direct current converters are in a one-to-one correspondence with the film capacitors. An input end of each direct current converter is connected in parallel to the corresponding film capacitor. The direct current converter is configured to perform voltage conversion on the second voltage output by the film capacitor.

According to the power conversion apparatus in this application, because the film capacitor has a high-voltage withstand characteristic, the second capacitor branch including the film capacitors is used to perform filtering and voltage division on the first voltage. In addition, the first capacitor branch including the electrolytic capacitor with a large capacitance is used to perform voltage stabilization on the voltage received by the power conversion apparatus. In this case, if any one of the plurality of direct current converters is short-circuited, a film capacitor connected in parallel to an input end of the direct current converter is bypassed. An amplitude of the first voltage obtained through filtering remains unchanged, but a quantity of the film capacitors connected in series is decreased. Therefore, a voltage borne by two ends of a film capacitor connected in parallel to an input end of a non-faulty direct current converter is increased. However, because the film capacitor has the high-voltage withstand characteristic, it can still be ensured that the non-faulty direct current converter in the power conversion apparatus can work normally. This improves working stability of the power conversion apparatus. In addition, costs of the film capacitor are lower than costs of the electrolytic capacitor. This helps reduce operation and maintenance costs of a power conversion circuit when the film capacitor is damaged due to a fault in the direct current converter.

In a possible implementation, the first capacitor branch includes a first electrolytic capacitor. The first electrolytic capacitor is configured to perform voltage stabilization on the voltage received by the power conversion apparatus, to obtain the first voltage.

According to the power conversion apparatus, when an amplitude of the voltage received by the power conversion apparatus is relatively low, an electrolytic capacitor may be used to perform voltage stabilization on the voltage received by the power conversion apparatus.

In a possible implementation, the first capacitor branch includes a plurality of second electrolytic capacitors connected in series. The plurality of second electrolytic capacitors connected in series are configured to perform voltage stabilization on the voltage received by the power conversion apparatus, to obtain the first voltage.

According to the power conversion apparatus, when an amplitude of the voltage received by the power conversion apparatus is relatively high and exceeds an upper limit of a withstand voltage of a single electrolytic capacitor, the plurality of second electrolytic capacitors may be connected in series to increase a withstand voltage of the second electrolytic capacitors, to meet a requirement for the voltage received by the power conversion apparatus.

In a possible implementation, the power conversion apparatus further includes a resistor branch connected in parallel to the first capacitor branch.

The resistor branch includes a plurality of first resistors. Each first resistor corresponds to each second electrolytic capacitor. Each first resistor is connected in parallel to the corresponding second electrolytic capacitor.

According to the power conversion apparatus, when the plurality of second electrolytic capacitors are connected in series, a voltage at two ends of the second electrolytic capacitor may deviate from a working voltage range of the second electrolytic capacitor due to individual differences between the plurality of second electrolytic capacitors. This causes damage to a component. To address this, the plurality of first resistors may be connected in series to form a voltage division branch, and each first resistor obtains a part of a voltage. Because the first resistor is connected in parallel to a second electrolytic capacitor, a voltage obtained by the first resistor is a voltage at two ends of the second electrolytic capacitor connected in parallel to the first resistor. In this way, the voltage at the two ends of the second electrolytic capacitor is controlled, and working safety of the second electrolytic capacitor is ensured.

In a possible implementation, the power conversion apparatus further includes a voltage equalization circuit. The voltage equalization circuit is connected to the first capacitor branch, and performs voltage stabilization on each second electrolytic capacitor.

According to the power conversion apparatus, the voltage equalization circuit may be used to control an amplitude of a voltage at two ends of each second electrolytic capacitor.

In a possible implementation, output ends of the plurality of direct current converters are connected in parallel.

According to the power conversion apparatus, the output ends of the plurality of direct current converters may be connected in parallel to implement high-power power supply or high-power charging.

In a possible implementation, the output ends of the plurality of direct current converters are connected in series.

According to the power conversion apparatus, when an output voltage of a single direct current converter cannot meet a requirement of a device connected to the power conversion apparatus for a voltage, the output ends of the plurality of direct current converters may be connected in series to increase an amplitude of a voltage output by the power conversion apparatus.

In a possible implementation, the power conversion apparatus further includes a protector.

The protector is configured to disconnect the power conversion apparatus from an external power supply when an input voltage or an input current of the power conversion apparatus exceeds a preset threshold.

According to the device, when an overcurrent or an overvoltage is caused to the power conversion apparatus due to damage to another component in the power conversion apparatus or damage to the device connected to the power conversion apparatus, the power conversion apparatus may be disconnected from the external power supply through the protector, to avoid extending a fault range.

In a possible implementation, the power conversion apparatus further includes a controller.

The controller is connected to the plurality of direct current converters, and the controller is configured to adjust a voltage conversion ratio of a non-faulty direct current converter when it is determined that any one of the plurality of direct current converters is faulty.

According to the power conversion apparatus, when there is a faulty direct current converter in the power conversion apparatus, a voltage originally received by the faulty direct current converter is allocated to non-faulty direct current converters in equal proportions. This causes an increase in input voltages of the non-faulty direct current converters. To ensure that an output voltage of the direct current converter meets the requirement of the connected device for the voltage, the controller may adjust a conversion ratio of the non-faulty direct current converter when there is the faulty direct current converter in the power conversion apparatus.

According to a second aspect, an embodiment of this application provides a charging pile. The charging pile may include a first conversion circuit and the power conversion apparatus according to any one of the first aspect of embodiments of this application and possible designs of the first aspect.

The first conversion circuit is connected to an external power supply, and converts an alternating current output by the external power supply into a direct current. The power conversion apparatus is connected to the first conversion circuit, and is configured to: perform voltage conversion on the direct current output by the first conversion circuit, and supply power to a load by using a direct current obtained through voltage conversion. The external power supply may be a utility frequency power grid, and the load may be a vehicle.

According to a third aspect, an embodiment of this application provides an on-board charger. The on-board charger includes a first conversion circuit and the power conversion apparatus according to any one of the first aspect of embodiments of this application and the possible designs of the first aspect.

The first conversion circuit is connected to an external power supply, and converts an alternating current output by the external power supply into a direct current. The power conversion apparatus is connected to the first conversion circuit, and is configured to: perform voltage conversion on the direct current output by the first conversion circuit, and supply power to a load by using a direct current obtained through voltage conversion. The external power supply may be a charging pile, and the load may be a battery of a vehicle.

According to a fourth aspect, an embodiment of this application provides an electric vehicle. The electric vehicle includes a high-voltage battery, a low-voltage battery, a low-voltage load, and the power conversion apparatus according to any one of the first aspect of embodiments of this application and the possible designs of the first aspect.

The high-voltage battery is connected to the power conversion apparatus. The power conversion apparatus is separately connected to the low-voltage battery and the low-voltage load. The power conversion apparatus is configured to: perform voltage conversion on electric energy output by the high-voltage battery, and supply power to the low-voltage battery and the low-voltage load by using electric energy obtained through voltage conversion.

It should be understood that, for technical effects that can be achieved by various design solutions in the second aspect to the fourth aspect, refer to descriptions of technical effects of corresponding solutions in the first aspect. Details are not described herein again.

### BRIEF DESCRIPTION OF DRAWINGS

FIG. 1 is a schematic diagram of a structure of an electric vehicle according to an embodiment of this application;
FIG. 2 is a schematic diagram of a structure of a direct current-to-direct current conversion module according to an embodiment of this application;
FIG. 3 is a schematic diagram 1 of a structure of a power conversion apparatus according to an embodiment of this application;
FIG. 4 is a schematic diagram 2 of a structure of a power conversion apparatus according to an embodiment of this application;
FIG. 5 is a schematic diagram 1 of a structure of a first capacitor branch according to an embodiment of this application;
FIG. 6 is a schematic diagram 2 of a structure of a first capacitor branch according to an embodiment of this application;
FIG. 7 is a schematic diagram 3 of a structure of a power conversion apparatus according to an embodiment of this application;
FIG. 8 is a schematic diagram 4 of a structure of a power conversion apparatus according to an embodiment of this application;
FIG. 9 is a schematic diagram of a structure of a second capacitor branch according to an embodiment of this application;
FIG. 10 is a schematic diagram of a structure of a direct current converter according to an embodiment of this application;
FIG. 11 is a schematic diagram 5 of a structure of a power conversion apparatus according to an embodiment of this application;
FIG. 12 is a schematic diagram 6 of a structure of a power conversion apparatus according to an embodiment of this application; and
FIG. 13 is a schematic diagram 7 of a structure of a power conversion apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of the present invention, "a plurality of" may also be understood as "at least two". The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects. In addition, it should be understood that, in description of this application, the terms such as "first" and "second" are merely used for distinguishing and description, but should not be understood as indicating or implying relative importance, or should not be understood as indicating or implying a sequence.

It should be noted that a "connection" in embodiments of this application may be understood as an electrical connection, and a connection between two electrical elements may be a direct or indirect connection between the two electrical elements. For example, a connection between A and B may mean that A and B are directly connected to each other, or A and B are indirectly connected to each other through one or more other electrical elements. For example, the connection between A and B may mean that A is directly connected to C, C is directly connected to B, and A and B are connected to each other through C.

It should be noted that a switch in embodiments of this application may be one or more of a plurality of types of switching transistors such as a relay, a metal-oxide-semiconductor field-effect transistor (metal-oxide-semiconductor field-effect transistor, MOSFET), a bipolar junction transistor (bipolar junction transistor, BJT), an insulated gate bipolar transistor (insulated gate bipolar transistor, IGBT), a silicon carbide (SiC) transistor, and the like, which are not listed one by one in embodiments of this application. A packaging form of each switching transistor may be a single-transistor package, or may be a multi-transistor package. This is not limited in embodiments of this application. Each switching transistor may include a first electrode, a second electrode, and a control electrode. The control electrode is configured to control on or off of the switching transistor. When the switching transistor is turned on, a current can be transmitted between the first electrode and the second electrode of the switching transistor. When the switching transistor is turned off, a current cannot be transmitted between the first electrode and the second electrode of the switching transistor. The MOSFET is used as an example. The control electrode of the switching transistor is a gate. The first electrode of the switching transistor may be a source, and the second electrode of the switching transistor may be a drain. Alternatively, the first electrode of the switching transistor may be a drain and the second electrode of the switching transistor may be a source.

It should be noted that a "conversion ratio" of a direct current converter in embodiments of this application is a ratio of an input voltage to an output voltage of the direct current converter, or may be understood as a voltage conversion ratio. If the direct current converter performs buck conversion, the output voltage of the direct current converter is less than the input voltage of the direct current converter, and the conversion ratio of the direct current converter is greater than 1. If the direct current converter performs boost conversion, the output voltage of the direct current converter is greater than the input voltage of the direct current converter, and the conversion ratio of the direct current converter is less than 1.

To facilitate understanding of the power conversion apparatus provided in embodiments of this application, the following first describes an application scenario of the power conversion apparatus.

The power conversion apparatus provided in embodiments of this application may be used in a power supply system or a charging system, and may convert a voltage output by a power supply into a supply voltage or a charging voltage required by a load, and supply power to or charge one or more loads by using the supply voltage or the charging voltage. For example, the power supply system may be an on-board charger (on-board charger, OBC) 11 in an electric vehicle, a power supply apparatus in an electronic device, or a charging pile for an electric vehicle. The electronic device may include but is not limited to a server, a base station, and the like.

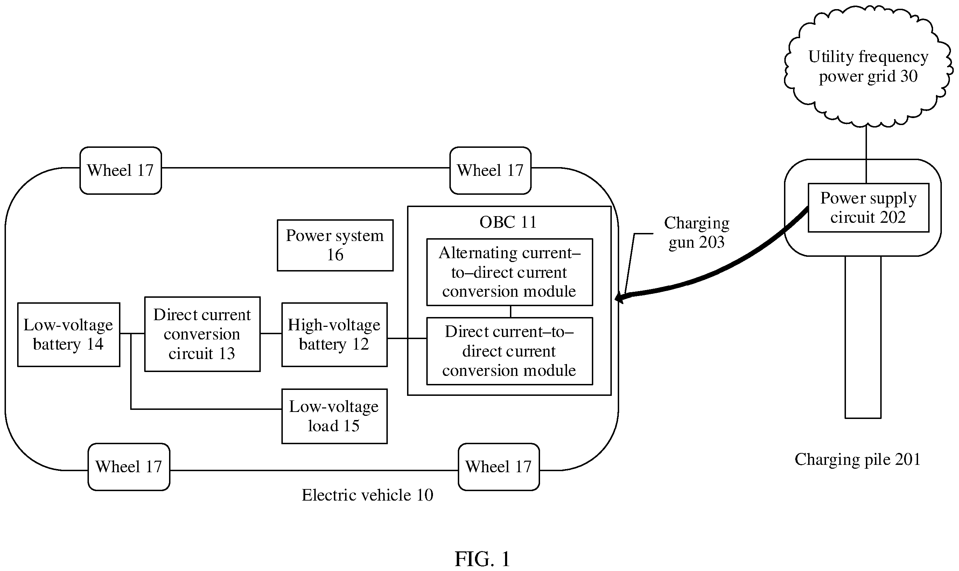

In a specific application scenario, the power conversion apparatus may be used in an electric vehicle. The electric vehicle, also referred to as a new energy vehicle, is a vehicle driven by electric energy. Refer to FIG. 1. An electric vehicle 10 mainly includes an on-board charger (on-board charger, OBC) 11, a high-voltage battery 12, a direct current conversion circuit 13, a low-voltage battery 14, a low-voltage load 15, a power system 16, and wheels 17. The high-voltage battery 12 and the low-voltage battery 14 each are a battery that can be charged and discharged, for example, a lithium battery or a lead-acid battery.

The power system 16 may usually include a reducer, a gear, one or more motors, and the like. When the electric vehicle travels, the high-voltage battery 12 may supply power to the power system 16. The motor in the power system 16 rotates, and drives the wheels 17 to rotate by using the gear and the reducer, to implement movement of the vehicle.

The low-voltage load 15 may be a functional system or a vehicle-mounted device inside a vehicle (the electric vehicle 10). In addition, a rated voltage of the low-voltage load 15 is far less than a rated voltage of the high-voltage battery 12. Each low-voltage load 15 may include but is not limited to at least one primary load and/or at least one secondary load. The primary load may be understood as a load that affects traveling of the vehicle, for example, a control system, an automatic driving system, an in-vehicle navigator, or the like. The secondary load may be understood as a load that does not affect traveling of the vehicle, for example, an in-vehicle radio, or the like. In some scenarios, the low-voltage load may include a plurality of primary loads, and the plurality of primary loads have a same function.

Usually, a charging pile 201 may be used to charge the electric vehicle 10.

In some scenarios, the OBC 11 may be provided with an alternating current-to-direct current conversion module. The alternating current-to-direct current conversion module is configured to: convert an alternating current output by a power supply circuit 202 into a direct current, and charge the high-voltage battery 12. The OBC 11 may be provided with a direct current-to-direct current conversion module. The direct current-to-direct current conversion module is configured to: convert a direct current voltage output by a power supply circuit 202 into a charging voltage of the high-voltage battery 12, and charge the high-voltage battery 12. The OBC 11 may be provided with both an alternating current-to-direct current conversion module and a direct current-to-direct current conversion module. The alternating current-to-direct current conversion module may convert an alternating current output by the power supply circuit 202 into a direct current, and the direct current-to-direct current conversion module may convert a direct current voltage into a charging voltage of the high-voltage battery 12, and charge the high-voltage battery 12.

The OBC 11 may further include a high-voltage power distribution unit (power distribution unit, PDU). The high-voltage power distribution unit may receive electric energy output by the direct current-to-direct current conversion module, or receive electric energy output by the alternating current-to-direct current conversion module. The PDU may allocate and manage the received electric energy.

In another specific application scenario, the power conversion apparatus is used in a charging pile for an electric vehicle. As shown in FIG. 1, the charging pile 201 mainly includes the power supply circuit 202 and a charging gun 203. An input end of the power supply circuit 202 may receive alternating current electric energy provided by a utility frequency power grid 30, and an output end of the power supply circuit 202 is connected to the charging gun 203 through a cable. Generally, the power supply circuit 202 may convert the received alternating current electric energy into charging electric energy adapted to the electric vehicle 10. The charging electric energy obtained through conversion performed by the power supply circuit 202 may be input to the OBC 11 through the charging gun 203. For example, the power supply circuit 202 may output alternating current electric energy or direct current electric energy through the charging gun 203.

Currently, a requirement for a charging rate of a new energy vehicle is increasingly high. To shorten a charging time of the new energy vehicle, there is a need to charge the new energy vehicle with high power. In actual use, a direct current-to-direct current conversion module and a direct current conversion circuit each include a direct current converter formed by a switch component. However, a power conversion capability of a single direct current converter is limited. Generally, the direct current-to-direct current conversion module is provided with a plurality of direct current converters, and each direct current converter converts a part of power, to improve a power conversion capability of the direct current-to-direct current conversion module, and implement high-power charging of the new energy vehicle.

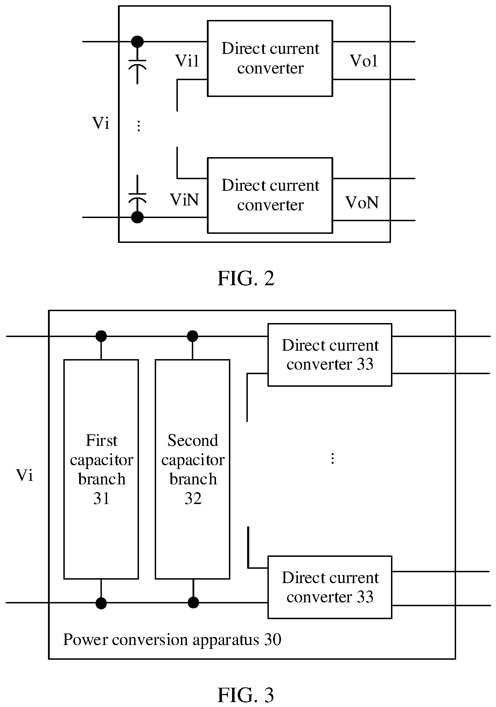

FIG. 2 is a schematic diagram of a circuit structure of a direct current-to-direct current conversion module. As shown in FIG. 2, the direct current-to-direct current conversion module may include N direct current converters, and input ends of the N direct current converters are connected in series. A positive electrode of an input end of a 1^{st} direct current converter in the N direct current converters is connected to a positive electrode of a power supply, and a negative electrode of an input end of a last direct current converter in the N direct current converters is connected to a negative electrode of the power supply.

Refer to FIG. 2. An input end of each direct current converter is usually connected in parallel to one or more electrolytic capacitors. A plurality of electrolytic capacitors form one or more electrolytic capacitor series branches, and perform voltage division on a voltage input by the power supply. An input voltage of each direct current converter is determined by a voltage obtained by the electrolytic capacitor connected in parallel. Because the input ends of the N direct current converters are connected in series, input currents of all the direct current converters are the same. Therefore, the electrolytic capacitor may control the input voltage of each direct current converter, to allocate input power to each direct current converter.

Refer to FIG. 2. Because the electrolytic capacitor has a large capacity characteristic, when the direct current-to-direct current conversion module performs conversion, the electrolytic capacitor of a large capacitance can keep an amplitude of an input voltage of the direct current-to-direct current conversion module stable, and then allocate power received by the direct current-to-direct current conversion module to all the direct current converters in equal proportions.

In actual use, when any one of the N direct current converters is faulty, for example, short-circuited, an electrolytic capacitor connected in parallel to an input end of the faulty direct current converter is short-circuited. In this case, the entire input voltage of the direct current-to-direct current conversion module is allocated to two ends of a non-faulty electrolytic capacitor. Because the electrolytic capacitor has a relatively poor high-voltage withstand capability, the electrolytic capacitor may be damaged due to a high voltage. In this case, the entire direct current-to-direct current conversion module cannot work, and safety of a component cannot be ensured.

In view of this, an embodiment of this application first provides a power conversion apparatus, to improve working stability of the power conversion apparatus and reduce operating costs of the power conversion apparatus. It should be noted that the power conversion apparatus provided in this embodiment of this application may be used in an electric vehicle. The following uses an example of supplying power to a high-voltage battery 12 in the electric vehicle for description. The power conversion apparatus provided in this embodiment of this application may be further used in another device, for example, a device including a plurality of loads, in scenarios such as supplying power to a plurality of loads in a server, supplying power to a plurality of loads in a base station, and the like, to improve availability of the server and the base station. This is not excessively limited in this application. The following uses an example in which the power conversion apparatus is used in the electric vehicle for description.

FIG. 3 is a schematic diagram of a structure of a power conversion apparatus according to this application. The power conversion apparatus 30 may be used in an electric vehicle. Refer to FIG. 3. The power conversion apparatus 30 includes a first capacitor branch 31, a second capacitor branch 32, and a plurality of direct current converters 33.

The first capacitor branch 31 includes at least one electrolytic capacitor, and is configured to perform voltage stabilization on a voltage received by the power conversion apparatus 30, to obtain a first voltage. The second capacitor branch 32 includes a plurality of film capacitors connected in series, and is configured to: perform filtering on the first voltage, and perform voltage division on a first voltage obtained through filtering, to obtain a plurality of second voltages. Each film capacitor obtains one second voltage. The direct current converters 33 are in a one-to-one correspondence with the film capacitors. An input end of each direct current converter 33 is connected in parallel to the corresponding film capacitor. The direct current converter 33 may receive, through the input end of the direct current converter 33, the second voltage output by the corresponding film capacitor, perform voltage conversion on the second voltage output by the film voltage, and output, through an output end of the direct current converter 33, a second voltage obtained through voltage conversion.

When the power conversion apparatus 30 is configured to supply power to or charge a connected component, the first capacitor branch 31 in the power conversion apparatus 30 receives a voltage input by an external power supply, and performs voltage stabilization on the received voltage, to obtain the first voltage. Each film capacitor in the second capacitor branch 32 performs voltage division on the received voltage to obtain the second voltage, and outputs the obtained second voltage to an input end of the corresponding direct current converter 33, so that the direct current converter 33 performs voltage conversion on the second voltage output by the film capacitor, to obtain a charging voltage or a supply voltage of a device, and supplies power to or charges the connected device. The direct current converter 33 may be a boost conversion component, or the direct current converter 33 may be a buck component.

In an optional solution, the power conversion apparatus 30 may be used in an OBC in the electric vehicle, and is used as a direct current-to-direct current conversion module in the OBC to perform voltage conversion on a direct current output by an alternating current-to-direct current conversion module or a charging pile.

In an example, output ends of the plurality of direct current converters 33 each are connected to a high-voltage battery in the electric vehicle, and the plurality of direct current converters 33 supply power to the high-voltage battery. In this case, the output ends of the plurality of direct current converters 33 are connected in parallel, to implement high-power charging of the electric vehicle.

In another example, output ends of the plurality of direct current converters 33 may be connected in series. A positive electrode of an output end of a 1^{st} direct current converter 33 in the plurality of direct current converters 33 is connected to a positive electrode of a high-voltage battery. A negative electrode of an output end of a last direct current converter 33 in the plurality of direct current converters 33 is connected to a negative electrode of the high-voltage battery.

In another optional solution, the power conversion apparatus 30 may be connected between a high-voltage battery and a low-voltage battery, and may be connected between the high-voltage battery and a low-voltage load. An output end of at least one direct current converter supplies power to the low-voltage load and supplies power to the low-voltage load, and an output end of at least one direct current converter is connected to the low-voltage battery and charges the low-voltage battery.

In actual application, the power conversion apparatus 30 may be fastened to the electric vehicle. In another implementation, the power conversion apparatus 30 may alternatively be disposed in a flexible and detachable form, and a fixed interface is provided on the electric vehicle, to implement connection between the power conversion apparatus 30 and a plurality of components in the electric vehicle. In this case, the power conversion apparatus 30 may be considered as an apparatus independent of the electric vehicle.

Refer to FIG. 3. The first capacitor branch 31 includes the electrolytic capacitors having a large capacity characteristic, and the second capacitor branch 32 includes the film capacitors having a high-voltage withstand characteristic. The film capacitors are in the one-to-one correspondence with the direct current converters, and each are connected in parallel to an input end of the corresponding direct current converter, to implement allocation of an input voltage to the corresponding direct current converter 33.

Still refer to FIG. 3. When the power conversion apparatus 30 starts to work, the first capacitor branch 31 that includes the electrolytic capacitor implements voltage stabilization on the voltage received by the power conversion apparatus 30, to obtain the first voltage, and the second capacitor branch 32 that includes the film capacitors performs filtering on the first voltage. A voltage division branch that includes the plurality of film capacitors connected in series performs a voltage division operation on the first voltage obtained through filtering, to obtain the plurality of second voltages. Each film capacitor obtains one second voltage, and outputs the obtained second voltage to the input end of the corresponding direct current converter 33, so that the corresponding direct current converter performs voltage conversion on the received voltage and supplies power to or charges the connected device.

In actual application, when any one direct current converter 33 in the power conversion apparatus 30 is short-circuited, a film capacitor connected in parallel to an input end of the faulty direct current converter is short-circuited, and a quantity of the film capacitors connected in series in the second capacitor branch 32 is decreased. In this case, a film capacitor connected in parallel to an input end of a non-faulty direct current converter bears the entire first voltage obtained through filter capacitors. Because the film capacitor has the high-voltage withstand characteristic, the film capacitor connected in parallel to the input end of the non-faulty direct current converter can still work normally in this case, and the non-faulty direct current converter 33 in the power conversion apparatus 30 can still receive a voltage and run. This improves working stability of the power conversion apparatus 30. In addition, costs of the film capacitor are lower than costs of the electrolytic capacitor. Therefore, operating costs of the power conversion apparatus 30 can also be reduced when there are an excessive quantity of short-circuited direct current converters and consequently film capacitors are damaged due to a high voltage.

Specifically, when there is a faulty direct current converter in the power conversion apparatus 30, the faulty direct current converter stops working, and the second voltage originally received by the faulty direct current converter is allocated to non-faulty direct current converters in equal proportions. A voltage received by the non-faulty direct current converter is increased, but a rated voltage of a device connected to an output end is fixed. Therefore, to ensure that the device connected to the output end of the non-faulty direct current converter can work normally, when it is determined that there is the faulty direct current converter, a conversion ratio of the non-faulty direct current converter may be adjusted, so that the output end of the non-faulty direct current converter can output a working voltage required by the connected device when the voltage received by the input end is increased.

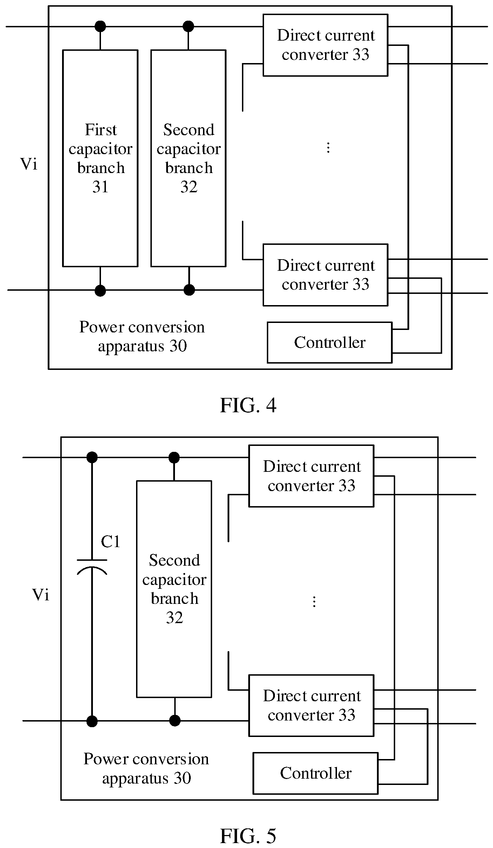

Refer to FIG. 4. The power conversion apparatus 30 may further include a controller. The controller may be connected to each direct current converter 33 in the power conversion apparatus 30, control the direct current converter 33 to perform voltage conversion on a voltage received by the input end, and adjust a conversion ratio of the direct current converter 33 when there is a faulty direct current converter in the power conversion apparatus 30.

The following separately describes in detail the first capacitor branch 31, the second capacitor branch 32, the controller, and the direct current converter 33 in the power conversion apparatus 30 with reference to embodiments.

### 1. First capacitor branch 31

Two ends of the first capacitor branch 31 are connected to two ports of an input end of the power conversion apparatus 30, and the first capacitor branch 31 perform voltage stabilization on the voltage received by the input end of the power conversion apparatus 30, to obtain the first voltage.

In an optional manner, as shown in FIG. 5, the first capacitor branch 31 may include one first electrolytic capacitor C1, and the first electrolytic capacitor C1 may perform voltage stabilization on the voltage received by the power conversion apparatus 30. A first end of the first electrolytic capacitor C1 forms a first end of the first capacitor branch 31, and is connected to a positive electrode of the external power supply. A second end of the first electrolytic capacitor C1 forms a second end of the first capacitor branch 31, and is connected to a negative electrode of the external power supply.

It should be understood that a withstand voltage of the first electrolytic capacitor C1 can meet a requirement of the power conversion apparatus 30 for an amplitude of a received voltage, and a capacitance of the first electrolytic capacitor C1 may meet a requirement of the power conversion apparatus 30 for a received power.

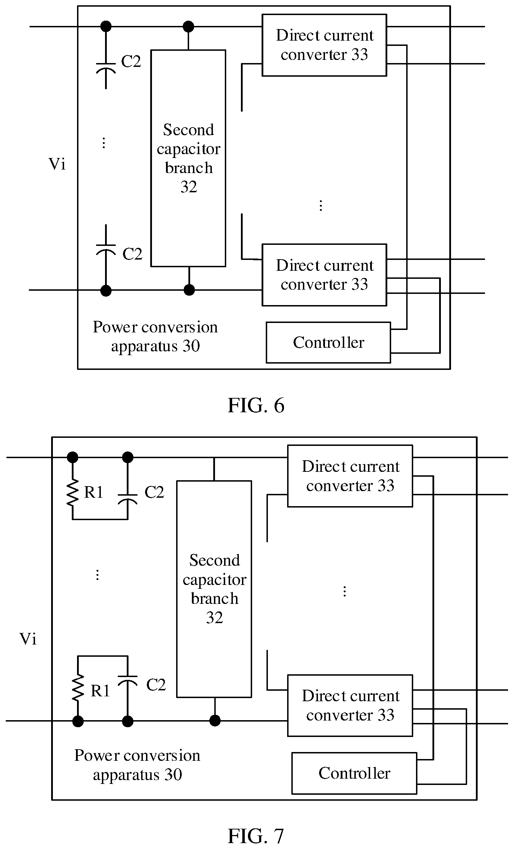

In another optional manner, as shown in FIG. 6, the first capacitor branch 31 may include a plurality of second electrolytic capacitors C2 connected in series, and the plurality of second electrolytic capacitors C2 connected in series may perform voltage stabilization on the voltage received by the power conversion apparatus 30. A first end of a 1^{st} second electrolytic capacitor C2 in the plurality of second electrolytic capacitors C2 is a first end of the first capacitor branch 31, and is connected to a positive electrode of the external power supply. A second end of a last second electrolytic capacitor C2 in the plurality of second electrolytic capacitors C2 is a second end of the first capacitor branch 31, and is connected to a negative electrode of the external power supply.

In actual use, due to a manufacturing problem, when the plurality of second electrolytic capacitors are connected in series, voltages obtained by the plurality of second electrolytic capacitors each may deviate from an optimal working voltage range of the plurality of second electrolytic capacitors. For example, when the voltage received by the power conversion apparatus 30 is 1000 V, if the first capacitor branch 31 includes two second electrolytic capacitors C2, a voltage at two ends of one second electrolytic capacitor C2 may be 520 V, and a voltage at two ends of the other second electrolytic capacitor C2 may be 480 V, due to individual differences between the two second electrolytic capacitors C2. However, a withstand voltage of an electrolytic capacitor may be only 510 V. Therefore, the electrolytic capacitor is damaged due to the high voltage. Therefore, to ensure working safety of the second electrolytic capacitor, the power conversion apparatus 30 may further include a component configured to control a voltage at two ends of each second electrolytic capacitor.

In an optional manner, as shown in FIG. 7, the two ends of the first capacitor branch 31 are connected in parallel to a resistor branch, and the resistor branch includes a plurality of first resistors R1 connected in series. A first end of a 1^{st} first resistor R1 in the plurality of first resistors R1 is connected to the first end of the 1^{st} second electrolytic capacitor C2 in the first capacitor branch 31, and a second end of a last first resistor R1 in the plurality of first resistors R1 is connected to the second end of the last second electrolytic capacitor C2 in the first capacitor branch 31.

In actual use, the first resistor R1 corresponds to the second electrolytic capacitor C2, and each first resistor R1 is connected in parallel to a corresponding second electrolytic capacitor C2. A plurality of first resistors R1 are connected in series to form a voltage division branch, and perform a voltage division operation on the first voltage to obtain a plurality of third voltages. Each first resistor R1 obtains one third voltage. Because the first resistor R1 is connected in parallel to the corresponding second electrolytic capacitor C2, a voltage at two ends of the second electrolytic capacitor C2 is a third voltage obtained by the corresponding first resistor R1, so that an amplitude of the voltage at the two ends of the second electrolytic capacitor C2 is controlled, and working safety of the second electrolytic capacitor C2 is ensured.

It should be understood that, when capacitances of the plurality of second electrolytic capacitors C2 in the first capacitor branch 31 are different, a resistance of the first resistor R1 connected in parallel to the second electrolytic capacitor C2 may be adjusted, to control a voltage of each second electrolytic capacitor C2 to be a required voltage.

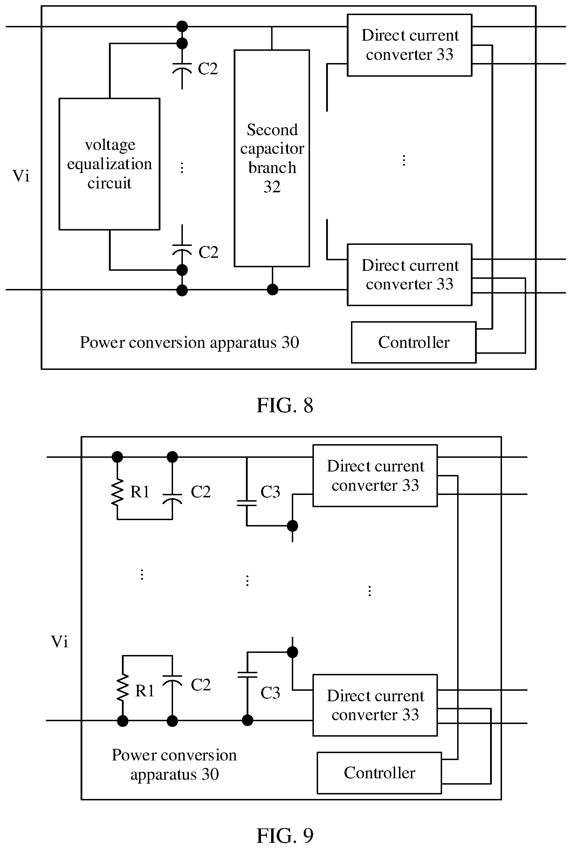

In another optional manner, as shown in FIG. 8, a voltage equalization circuit is disposed at the two ends of the first capacitor branch 31, and the voltage equalization circuit is configured to equalize a voltage at two ends of each second electrolytic capacitor C2 in the first capacitor branch 31.

### 2. Second capacitor branch 32

A first end of the second capacitor branch 32 is connected to the first end of the first capacitor branch 31, and a second end of the second capacitor branch 32 is connected to the second end of the first capacitor branch 31. The second capacitor branch 32 includes a plurality of film capacitors C3 connected in series. The plurality of film capacitors C3 connected in series may perform filtering on the first voltage output by the first capacitor branch 31. In addition, the plurality of film capacitors C3 connected in series form a voltage division branch, and perform voltage division on a first voltage obtained through filtering, to obtain a plurality of second voltages. Each film capacitor C3 obtains one second voltage.

Refer to FIG. 9. The second capacitor branch 32 includes the plurality of film capacitors C3 connected in series, and the film capacitors C3 are in a one-to-one correspondence with the direct current converters 33 in the power conversion apparatus 30.

Specifically, a first end of a 1^{st} film capacitor C3 in the plurality of film capacitors C3 is connected to the first end of the first capacitor branch 31, a second end of a last film capacitor C3 in the plurality of film capacitors C3 is connected to the second end of the first capacitor branch 31, and each film capacitor C3 is connected in parallel to an input end of the corresponding direct current converter 33.

The plurality of film capacitors C3 are connected in series to form a voltage division branch, and each film capacitor C3 obtain one second voltage. Because the film capacitor C3 is connected in parallel to the input end of the corresponding direct current converter, a voltage received by the direct current converter corresponding to the film capacitor C3 is the second voltage, so that power allocation of the direct current converter 33 corresponding to the film capacitor C3 is implemented.

Still refer to FIG. 9. Because the film capacitor C3 is connected in parallel to the input end of the corresponding direct current converter 33 and the plurality of film capacitors C3 are connected in series, input ends of the plurality of direct current converters 33 are connected in series. Therefore, currents received by the input ends of all the direct current converter 33 are the same. Power received by each direct current converter 33 is determined by a voltage received by the direct current converter 33, and the voltage received by the direct current converter 33 is determined by the second voltage obtained by the corresponding film capacitor C3. Therefore, the power received by the direct current converter can be adjusted by adjusting a parameter of the film capacitor that is in the second capacitor branch 32 and that corresponds to the direct current converter 33.

Still refer to FIG. 9. The plurality of film capacitors C3 are connected in series. When there is a faulty direct current converter in the power conversion apparatus 30, a film capacitor C3 corresponding to the direct current converter 33 is bypassed. In this case, a quantity of the film capacitors C3 connected in series in the second capacitor branch 32 is decreased, but an amplitude of the first voltage obtained through filtering remains unchanged. Therefore, a voltage at two ends of each of the plurality of film capacitors C3 connected in series is increased. For example, the amplitude of the first voltage obtained through filtering is 100 V. If the first capacitor branch 31 includes five film capacitors C3 connected in series, a voltage obtained by each film capacitor is 20 V. After one film capacitor C3 is bypassed, the first capacitor branch 31 includes four film capacitors C3 connected in series. In this case, a voltage obtained by the film capacitor C3 is 25 V. Because the film capacitor C3 has a high-voltage withstand characteristic, the film voltages C3 can still work normally in this case, to ensure that direct current converters 33 corresponding to the film capacitors can work normally. This improves working stability of the power conversion apparatus 30.

Still refer to FIG. 9. Costs of the film capacitor C3 are lower than costs of the electrolytic capacitor. Therefore, running costs of the power conversion apparatus 30 can be reduced when there are a large quantity of faulty direct current converters in the power conversion apparatus 30 and consequently a voltage at two ends of a film capacitor corresponding to a non-faulty direct current converter exceeds a maximum withstand voltage of the film capacitor.

### 3. Direct current converter 33

The input ends of the plurality of direct current converters 33 are connected in series. A first input end of the 1^{st} direct current converter 33 of the plurality of direct current converters 33 is connected to the first end of the first capacitor branch 31 and the first end of the second capacitor branch 32, and a second input end of the last direct current converter 33 of the plurality of direct current converters 33 is connected to the second end of the first capacitor branch 31 and the second end of the second capacitor branch 32.

In this embodiment of this application, the direct current converter 33 may use an existing structure. In other words, the direct current converter 33 may use an H-bridge rectifier circuit. A first end of a first bridge arm and a first end of a second bridge arm in the H-bridge rectifier circuit form a first input end of the direct current converter 33. A second end of the first bridge arm and a second end of the second bridge arm in the H-bridge rectifier circuit 33 form a second input end of the direct current converter 33. An intermediate node of the first bridge arm in the H-bridge rectifier circuit forms a first output end of the direct current converter 33. An intermediate node of the second bridge arm in the H-bridge rectifier circuit forms a second output end of the direct current converter 33. The direct current converter 33 may be connected to two ends of a corresponding film capacitor through the first input end and the second input end of the direct current converter 33, and receive a second voltage output by the corresponding film capacitor. The direct current converter 33 outputs, to a connected device through the first output end and the second output end of the direct current converter 33, electric energy obtained through voltage conversion.

The direct current converter 33 may perform voltage adjustment on electric energy output by the corresponding film capacitor, and output a supply voltage required by the device connected to the direct current converter 33.

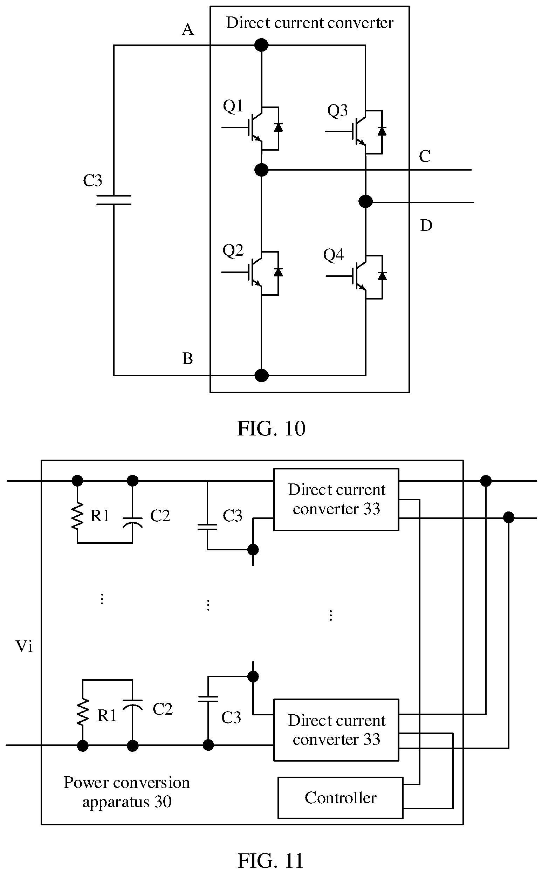

For example, a structure of the direct current converter 33 may be shown in FIG. 10. In FIG. 10, A is used as the first input end of the direct current converter 33, B is used as the second input end of the direct current converter 33, C is used as the first output end of the direct current converter 33, D is used as the second output end of the direct current converter 33, and MOS transistors Q1/Q2/Q3/Q4 form an H-bridge rectifier circuit.

When the power conversion apparatus 30 supplies power to or charges a device connected to an output end of the power conversion apparatus 30, A and B are used as input ends and are configured to receive a second voltage output by the corresponding film capacitor, and C and D are used as output ends and are configured to: output a voltage obtained through voltage adjustment performed by the MOS transistors Q1/Q2/Q3/Q4, and supply power to or charge the connected device.

Still refer to FIG. 10. When the direct current converter 33 is short-circuited, a film capacitor C3 connected in parallel to the input end of the direct current converter 33 is short-circuited. In this case, the faulty direct current converter is bypassed from a series branch to which the direct current converter 33 belongs, to ensure that a non-faulty direct current converter can work normally. When another type of fault occurs in the direct current converter 33, the MOS transistors Q1 and Q2 may be controlled to be turned on, so that the faulty direct current converter is bypassed from a direct current converter connected in series, to ensure the non-faulty direct current converter can work normally.

In an optional manner, as shown in FIG. 11, the power conversion apparatus 30 is used in an electric vehicle, and is used as a direct current-to-direct current conversion module of an OBC in the electric vehicle. In this case, the output ends of all the direct current converters 33 in the power conversion apparatus 30 are connected in parallel, and are connected to a high-voltage battery, to charge the high-voltage battery.

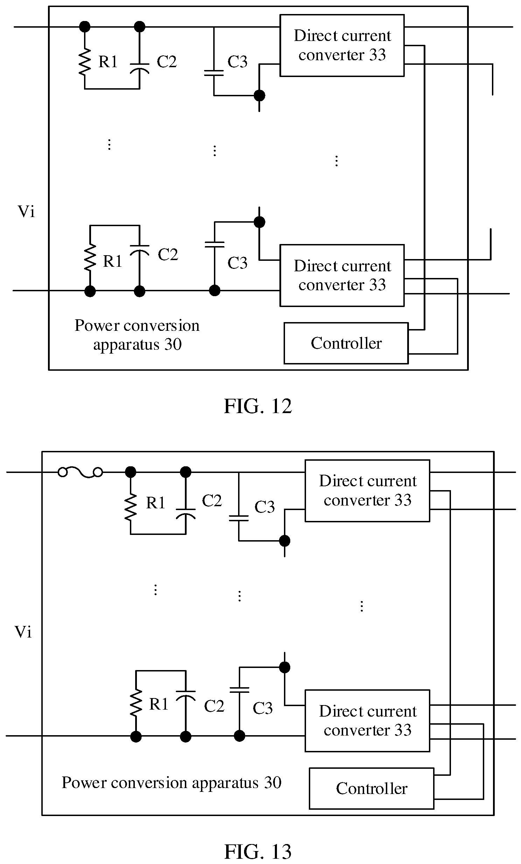

In another optional manner, as shown in FIG. 12, the power conversion apparatus 30 is used in an electric vehicle, and is used as a direct current-to-direct current conversion module of an OBC in the electric vehicle. If an output voltage of a single direct current converter 33 is less than a charging voltage of a high-voltage battery, the output ends of the plurality of direct current converters 33 may be connected in series, to increase an amplitude of an output voltage and meet a requirement of the high-voltage battery for the charging voltage. In this case, the first output end of the 1^{st} direct current converter in the plurality of direct current converters 33 is connected to a positive electrode of the high-voltage battery, and the second output end of the last direct current converter in the plurality of direct current converters 33 is connected to a negative electrode of the high-voltage battery.

In still another optional manner, the power conversion apparatus 30 is used in an electric vehicle. The power conversion apparatus 30 is connected between a high-voltage battery and a low-voltage battery, and is connected between the high-voltage battery and a low-voltage load. The power conversion apparatus may convert a voltage input by the high-voltage battery into a charging voltage of the low-voltage battery and a supply voltage of the low-voltage load. In this case, the plurality of direct current converters 33 are connected to different components. For example, an output end of the 1^{st} direct current converter is connected to the low-voltage battery, an output end of the 2^{nd} direct current converter is connected to a first low-voltage load, and so on, to power supply to or charge all the components.

It should be understood that the foregoing descriptions of the direct current converter are merely an example. In actual use, the direct current converter may use another circuit structure, for example, a half-bridge rectifier circuit, an inductor-inductor-capacitor (inductor-inductor-capacitor, LLC) resonant conversion circuit, a forward circuit, a flyback circuit, a voltage-adjustable boost (Boost) circuit, a voltage-adjustable buck (Buck) circuit, or a buck-boost circuit.

### 4. Controller

The controller is connected to each direct current converter 33 in the power conversion apparatus 30. The controller controls each direct current converter 33 to perform voltage conversion on a voltage received by an input end of each direct current converter 33, and adjusts a conversion ratio of a non-faulty direct current converter when there is a faulty direct current converter in the power conversion apparatus 30.

During specific implementation, the direct current converter 33 may include components such as a switching transistor, a diode, an inductor, a capacitor, and the like. A working status and a conversion ratio of the direct current converter may be implemented by adjusting working statuses of the components (for example, the switching transistor).

Specifically, if the switching transistor in the direct current converter 33 is a MOS transistor, the controller may be connected to a gate of the MOS transistor. The controller may control the MOS transistor to be turned on or turned off, so that the direct current converter adjusts a voltage received by an input end of the direct current converter, and supplies power to or charges a connected device. If the switching transistor in the direct current converter 33 is a BJT, the controller may be connected to a base of the BJT. The controller may control the BJT to be turned on or turned off, so that the direct current converter adjusts a voltage received by an input end of the direct current converter, and supplies power to or charges a connected device.

In an optional manner, the power conversion apparatus 30 further includes a detection apparatus. The detection apparatus may be connected to the direct current converter in the power conversion apparatus 30. The detection apparatus may detect the working status of the direct current converter. When determining that the direct current converter is faulty, the detection apparatus may generate, to the controller, a first signal indicating that the direct current converter is faulty. When receiving the first signal, the controller adjusts a drive signal that is to be output to a switching transistor in a non-faulty direct current converter, to adjust a conversion ratio of the non-faulty direct current converter. As a result, the direct current converter outputs a supply voltage or a charging voltage that meets a requirement of a connected device for a voltage.

Optionally, the detection apparatus may detect an output current and an output voltage of the direct current converter and determine the working status of the direct current converter by using the detected output current and output voltage.

In another optional manner, the controller in the power conversion apparatus 30 is further connected to an external detection apparatus. When receiving a second signal, indicating that a direct current converter is faulty, sent by the external detection apparatus, the controller adjusts a drive signal that is to be output to a switching transistor in a non-faulty direct current converter, to adjust a conversion ratio of the non-faulty direct current converter. As a result, the direct current converter outputs a supply voltage that meets a requirement of a connected device for a voltage.

During specific implementation, the controller may be any one of a microcontroller unit (micro controller unit, MCU), a central processing unit (central processing unit, CPU), or a digital signal processor (digital signal processor, DSP). Certainly, a specific form of the controller is not limited to the foregoing examples.

It should be understood that the controller can maintain running of the power conversion apparatus 30 only when a single direct current converter is faulty or a few direct current converters are faulty. When there are an excessive quantity of faulty direct current converters in the power conversion apparatus 30, another component in the power conversion apparatus is faulty, or a device connected to the power conversion apparatus is faulty, a running status of the power conversion apparatus cannot be ensured. On this basis, the power conversion apparatus may further include a protector. The protector may be connected to the first end of the first capacitor branch 31 and the first end of the second capacitor branch 32. The protector may detect a voltage or a current received by the power conversion apparatus. When the device connected to the power conversion apparatus or the component in the power conversion apparatus is faulty and consequently a voltage or a current on a line exceeds a specified threshold, the protector may disconnect the power conversion apparatus from the external power supply, to protect safety of the power conversion apparatus and the component connected to the power conversion apparatus. Refer to FIG. 13. The protector may be a fuse. Certainly, the protector may be another protection component, for example, another overvoltage or overcurrent protection component, such as a circuit breaker and the like.

Based on a same inventive concept, this application further provides a charging pile. The charging pile may include a first conversion circuit and the foregoing power conversion apparatus 30.

The first conversion circuit is connected to an external power supply, converts an alternating current output by the external power supply into a direct current, and outputs the direct current to the power conversion apparatus. The power conversion apparatus is connected to the first conversion circuit, and the power conversion apparatus may perform voltage conversion on the direct current output by the first conversion circuit, and supply power to a load by using a voltage obtained through voltage conversion.

During specific implementation, the external power supply may be a utility frequency power grid. The first conversion circuit may convert an alternating current of the utility frequency power grid into a direct current, and the power conversion apparatus may convert the voltage of the direct current output by the first conversion circuit into a charging voltage of a vehicle, to charge the vehicle.

Based on a same inventive concept, an embodiment of this application further provides an on-board charger. The on-board charger includes a first conversion circuit and the foregoing power conversion apparatus 30.

The first conversion circuit is connected to an external power supply, converts an alternating current output by the external power supply into a direct current, and outputs the direct current to the power conversion apparatus. The power conversion apparatus is connected to the first conversion circuit, and the power conversion apparatus may perform voltage conversion on the direct current output by the first conversion circuit, and supply power to a load by using a voltage obtained through voltage conversion.

During specific implementation, the first conversion circuit in the on-board charger may convert an alternating current obtained from a charging pile into a direct current, and the power conversion apparatus may convert the voltage of the direct current output by the first conversion circuit into a charging voltage of a high-voltage battery, and charge the high-voltage battery.

It should be understood that if the charging pile obtains direct current electric energy, the on-board charger in this application may include only the power conversion apparatus. The power conversion apparatus may directly convert a direct current obtained from the charging pile into a charging voltage of the high-voltage battery, and charge the high-voltage battery.

Based on a same inventive concept, this application further provides an electric vehicle. The electric vehicle may include a high-voltage battery, a low-voltage battery, a low-voltage load, and the foregoing power conversion apparatus 30.

The high-voltage battery is connected to the power conversion apparatus, and is configured to output stored electric energy to the power conversion apparatus.

The power conversion apparatus is separately connected to the low-voltage battery and the low-voltage load, and is configured to perform voltage conversion on electric energy output by the high-voltage battery, and supply power to the low-voltage battery and the low-voltage load by using electric energy obtained through voltage conversion.

It should be understood that the solutions provided in this application may be applied to different vehicles, and specifically include but are not limited to different types of vehicles such as a pure electric vehicle (Pure EV/Battery EV), a hybrid electric vehicle (Hybrid Electric Vehicle, HEV), and the like. In addition, the apparatus provided in this application is not limited to being used in the field of vehicles, but may be further used in the fields of wind power generation, photovoltaic power generation, and the like. For example, the apparatus provided in this application may be used in an energy storage system in a wind power generation system or a photovoltaic power generation system, and charge a battery in the energy storage system.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A power conversion apparatus, comprising:
a first capacitor branch, wherein the first capacitor branch comprises at least one electrolytic capacitor, and is configured to perform voltage stabilization on a voltage received by the power conversion apparatus, to obtain a first voltage;
a second capacitor branch, wherein the second capacitor branch comprises a plurality of film capacitors connected in series, and is configured to: perform filtering on the first voltage, and perform voltage division on a first voltage obtained through filtering, to obtain a plurality of second voltages, wherein each film capacitor obtains one second voltage;
direct current converters in a one-to-one correspondence with the film capacitors, wherein an input end of each direct current converter is connected in parallel to the corresponding film capacitor; and
the direct current converter is configured to perform voltage conversion on the second voltage output by the film capacitor.

2. The power conversion apparatus according to claim 1, wherein the first capacitor branch comprises a first electrolytic capacitor, and the first electrolytic capacitor is configured to perform voltage stabilization on the voltage received by the power conversion apparatus, to obtain the first voltage.

3. The power conversion apparatus according to claim 1, wherein the first capacitor branch comprises a plurality of second electrolytic capacitors connected in series, and the plurality of second electrolytic capacitors connected in series are configured to perform voltage stabilization on the voltage received by the power conversion apparatus, to obtain the first voltage.

4. The power conversion apparatus according to claim 3, wherein the power conversion apparatus further comprises a resistor branch connected in parallel to the first capacitor branch, the resistor branch comprises a plurality of first resistors, each first resistor corresponds to each second electrolytic capacitor, and each first resistor is connected in parallel to the corresponding second electrolytic capacitor.

5. The power conversion apparatus according to claim 3, wherein the power conversion apparatus further comprises a voltage equalization circuit; and
the voltage equalization circuit is connected to the first capacitor branch, and performs voltage stabilization on each second electrolytic capacitor.

6. The power conversion apparatus according to any one of claims 1 to 5, wherein output ends of the plurality of direct current converters are connected in parallel.

7. The power conversion apparatus according to any one of claims 1 to 6, wherein the output ends of the plurality of direct current converters are connected in series.

8. The power conversion apparatus according to any one of claims 1 to 7, wherein the power conversion apparatus further comprises a protector; and
the protector is configured to disconnect the power conversion apparatus from an external power supply when the voltage or a current received by the power conversion apparatus exceeds a preset threshold.

9. The power conversion apparatus according to any one of claims 1 to 8, wherein the power conversion apparatus further comprises a controller; and
the controller is connected to the plurality of direct current converters, and the controller is configured to adjust a voltage conversion ratio of a non-faulty direct current converter when it is determined that any one of the plurality of direct current converters is faulty.

10. A charging pile, wherein the charging pile comprises a first conversion circuit and the power conversion apparatus according to any one of claims 1 to 9;
the first conversion circuit is configured to: connect to an external power supply, and convert an alternating current output by the external power supply into a direct current; and
the power conversion apparatus is connected to the first conversion circuit, and is configured to: perform voltage conversion on the direct current output by the first conversion circuit, and supply power to a connected device by using a direct current obtained through voltage conversion.

11. An on-board charger, wherein the on-board charger comprises a first conversion circuit and the power conversion apparatus according to any one of claims 1 to 9;
the first conversion circuit is configured to: receive an alternating current output by a charging pile, and convert the alternating current output by the charging pile into a direct current; and
the power conversion apparatus is connected to the first conversion circuit, and is configured to: perform voltage conversion on the direct current output by the first conversion circuit, and charge a high-voltage battery of an electric vehicle by using a direct current obtained through voltage conversion.

12. An electric vehicle, wherein the electric vehicle comprises a high-voltage battery, a low-voltage battery, a low-voltage load, and the power conversion apparatus according to any one of claims 1 to 9;
the high-voltage battery is connected to the power conversion apparatus; and
the power conversion apparatus is separately connected to the low-voltage battery and the low-voltage load, and the power conversion apparatus is configured to: perform voltage conversion on electric energy output by the high-voltage battery, and supply power to the low-voltage battery and the low-voltage load by using electric energy obtained through voltage conversion.
